Europäisches Patentamt

European Patent Office

Office européen des brevets

(19)

(11) Numéro de publication: **0 020 216**
**B1**

(12) **FASCICULE DE BREVET EUROPEEN**

(45) Date de publication du fascicule du brevet:
01.08.84

(21) Numéro de dépôt: 80400646.8

(22) Date de dépôt: 12.05.80

(51) Int. Cl.³: **G 02 F 1/21,** G 02 F 7/00,
G 02 F 3/00

(54) Modulateur d'intensité lumineuse à commande numérique en optique intégrée et convertisseur numérique analogique comprenant un tel modulateur.

(30) Priorité: 23.05.79 FR 7913194

(43) Date de publication de la demande:
10.12.80 Bulletin 80/25

(45) Mention de la délivrance du brevet:
01.08.84 Bulletin 84/31

(84) Etats contractants désignés:
DE GB NL

(56) Documents cités:
FR - A - 2 296 866
US - A - 3 619 031
US - A - 4 058 722

APPLIED OPTICS, vol. 17, no. 10, 15 mai 1978, pages 1493-1498 New York, U.S.A.,H.F. TAYLOR: "Guided wave electrooptic devices for logic and computation"
IEEE JOURNAL OF QUANTUM ELECTRONICS, vol. QE. 15, no. 4, avril 1979, pages 210-216,H.F. TAYLOR: "An optical analog-to-digital converter-design and analysis"
ELECTRONICS LETTERS, vol. 15, no. 10, mai 1979, pages 283-285 Hitchin Herts, G.B.,H. ITO et al:: "Integrated bistable optical device using mach-zehnder interferometric optical waveguide"

(73) Titulaire: **THOMSON-CSF, 173, Boulevard Haussmann, F-75379 Paris Cedex 08 (FR)**

(72) Inventeur: **Papuchon, Michel, "THOMSON-CSF" SCPI - 173, Bld Haussmann, F-75360 Paris Cedex 08 (FR)**
Inventeur: **Puech, Claude, "THOMSON-CSF" SCPI - 173, Bld Haussmann, F-75360 Paris Cedex 08 (FR)**
Inventeur: **Anne, Jean-Claude, "THOMSON-CSF" SCPI - 173, Bld Haussmann, F-75360 Paris Cedex 08 (FR)**

(74) Mandataire: **Wang, Pierre et al, THOMSON-CSF SCPI 173, Bld Haussmann, F-75379 Paris Cedex 08 (FR)**

## Description

L'invention concerne un modulateur d'intensité lumineuse à commande numérique, réalisé en optique intégrée.

Il est connu du document FR-A-2 296 866 un modulateur d'intensité lumineuse à commande numérique qui consiste à utiliser un milieu de propagation magnéto-optique et à convertir un mode de transmission de rayonnement optique incident en un autre mode de transmission afin de constituer une fraction de rayonnement dont l'intensité est modulable par des courants de commande.

Il est connu de réaliser des modulateurs de lumière commandés par une tension analogique, à partir d'un interféromètre à deux bras dans lequel on crée, par effet électro-optique, une différence de vitesse de propagation entre les deux bras, produisant un déphasage commandé électriquement. L'intensité lumineuse émergente varie avec le déphasage et est donc modulée par la tension analogique induisant l'effet électro-optique. La réponse d'un tel modulateur est sinusoïdale mais peut être linéarisée en ajoutant une boucle de rétro-action opto-électronique. Ce perfectionnement est décrit dans la demande de brevet français publiée N° 2 453 426 déposé par la demanderesse.

L'invention vise à utiliser la même structure optique pour réaliser un modulateur à signaux de commande multiples, ces signaux étant de plus numériques, c'est-à-dire ayant deux états de tension. Un modulateur à commande numérique trouve en effet de nombreuses applications dans les domaines de télécommunications et de traitement de l'information. Pour qu'un tel modulateur soit compatible avec tous les circuits électroniques existants, il faut que les tensions de commande soient faibles, de préférence du même ordre de grandeur que les tensions utilisées en logique TTL (0–5 volts).

Par le choix de l'emplacement des électrodes et de l'orientation cristalline du substrat dans lequel est réalisé l'interféromètre, on peut faire en sorte que le champ électrique créé entre les électrodes n'agisse sur les vitesses de propagation des ondes que dans les portions des bras situées en vis-à-vis de ces électrodes. En juxtaposant le long de l'interféromètre plusieurs jeux d'électrodes auxquels sont appliquées respectivement les tensions de commande, on peut agir sur les positions correspondantes de l'interféromètre de façon indépendante,'avec une interaction négligeable entre les différents jeux d'électrodes. Pour réaliser une commande numérique, il faut que la réponse en intensité lumineuse soit fonction des poids respectifs des différents bits de commande. Pour cela, l'invention prévoit, soit d'utiliser des jeux d'électrodes de longueurs différentes, en progression géométrique selon les puissances successives de 2, soit des jeux d'électrodes de même longueur, les bits de commande étant appliqués à des diviseurs de tension dont les rapports de tension sont selon les puissances successives de 2. Ces deux procédés permettent d'obtenir des déphasages successifs dont les valeurs, lorsque les bits de commande sont à l'état 0, sont selon les puissances successives de 2. De plus, il est possible d'obtenir un réglage du zéro (l'intensité de sortie est minimale lorsque tous les bits sont à 0) au moyen d'électrodes de polarisation auxquelles est appliquée une tension réglable.

L'invention a donc pour objet un modulateur d'intensité lumineuse à commande électrique numérique comprenant, à la surface d'un substrat (S) possédant des propriétés électro-optiques, un interféromètre à deux bras (2, 3) reliés à un guide d'entrée (11) recevant un rayonnement optique incident, les fractions de rayonnement propagées dans les deux bras se combinant à la sortie de l'interféromètre dans un guide de sortie (4), l'intensité de rayonnement émergent étant fonction du déphasage introduit par ladite commande électrique numérique entre les fractions de rayonnement propagées dans les deux bras (2, 3); ledit déphasage étant la somme de déphasages élémentaires créés le long desdits bras (2, 3) par des tensions numériques de commande, caractérisé en ce que lesdits déphasages élémentaires sont ordonnés selon $n$ termes successifs d'une progression géométrique de raison 2, $n$ étant le nombre desdites tensions numériques de commande $(V_0, V_1, V_2, ... V_{n-1})$; l'ensemble ordonné des $2^n$ valeurs distinctes dudit déphasage découlant de ladite commande électrique numérique étant compris dans une plage assignant $2^n$ valeurs ordonnées à l'intensité lumineuse émergente $(I_S)$; la plage de variation du déphasage n'étant pas supérieure à $\pi$ et correspondant à une partie comprise entre deux extrema successifs de la courbe de variation de l'intensité lumineuse émergente (IS) en fonction du déphasage.

L'invention sera mieux comprise au moyen de la description ci-après et des dessins annexés où:

– la fig. 1 représente un interféromètre à deux bras de type connu,

– la fig. 2 représente la courbe de réponse de l'interféromètre de la fig. 1,

– la fig. 3 est un schéma de modulateur selon l'invention,

– la fig. 4 représente la courbe de réponse du modulateur de la fig. 3,

– la fig. 5 représente un mode de réalisation de l'invention,

– les figs 6, 7 et 8 sont des schémas de variantes de réalisation de l'invention,

– la fig. 9 est un schéma de convertisseur numérique-analogique selon l'invention.

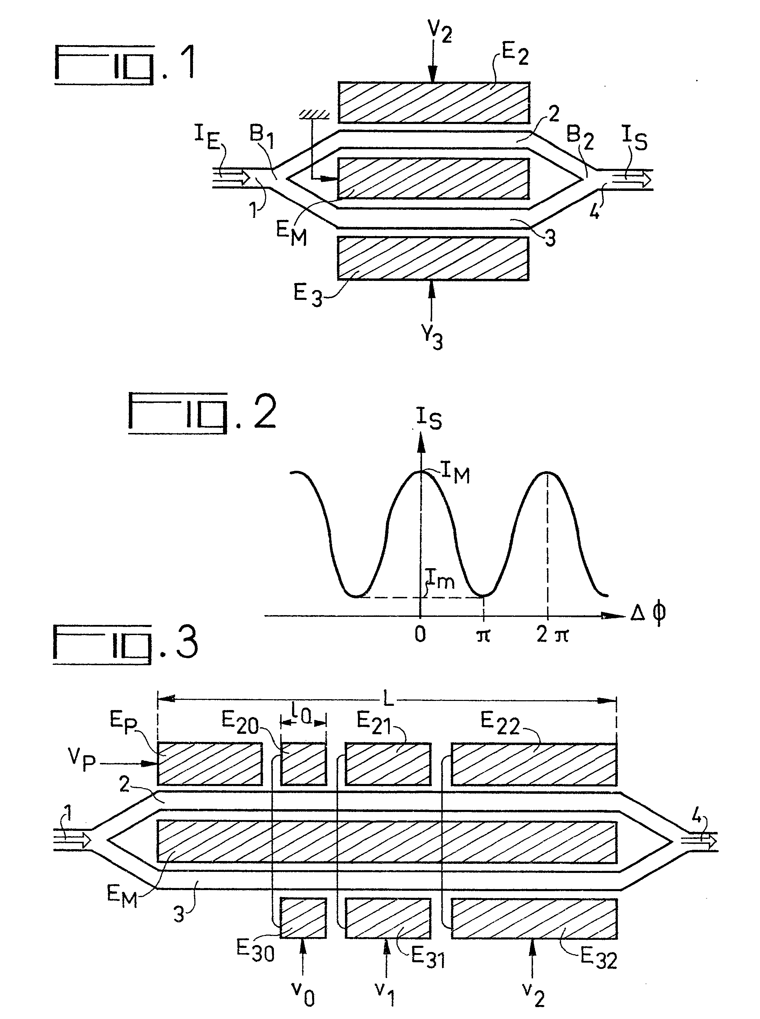

La fig. 1 représente un interféromètre à deux bras de type connu pouvant servir à moduler l'intensité lumineuse. Cet interféromètre comprend une branche 1 de guide d'onde monomode dans laquelle est couplée une onde lumineuse d'intensité $I_E$. Cette branche 1 bifurque en une bifurcation $B_1$ en deux bras parallèles 2 et 3 constituant des guides monomodes qui se rejoignent en une bifurcation $B_2$ pour se prolonger en une branche 4 de guide d'onde monomode où l'on peut récupérer une intensité $I_S$. Les directions de propagation de la lumière sont les mêmes dans les quatre guides. Des électrodes sont disposées de part et d'autre de chacun des guides 2 et 3, par exemple une électrode centrale $E_M$, une électrode $E_2$ de l'autre côté du bras 2 et à laquelle on applique une tension $V_2$ et une électrode $E_3$ de l'autre côté du bras 3 et à laquelle on applique une tension $V_3$, l'électrode $E_M$ étant reliée à la masse. La disposition des électrodes choisie pour la figure, c'est-à-dire ne recouvrant pas les guides mais leur étant adjacents, provoque dans chacun des guides 2 et 3 des champs électriques perpendiculaires à la direction de propagation des ondes lumineuses et dans le plan de la figure. Dans ce cas, le mode de propagation utilisé est un mode TE. L'ensemble du dispositif est réalisé à la surface d'un substrat possédant des propriétés électro-optiques, tel que le niobate de lithium ($LiNbO_3$), le tantalate de lithium ($LiTaO_3$), l'arséniure de Gallium (GaAs)... Il est par exemple possible d'obtenir des guides en effectuant une diffusion de titane dans un substrat grâce à des procédés de photolithographie classique. Dans le cas de la figure où les champs électriques appliqués aux guides sont dans le plan de la figure, il est préférable que l'axe c du niobate de lithium soit également dans ce plan et perpendiculaire à la direction de propagation commune aux guides 1 à 4, de façon à présenter l'effet électro-optique maximal. Si les tensions $V_2$ et $V_3$ sont de même signe, les champs électriques appliqués aux bras 2 et 3 sont en sens opposé, ces champs provoquent des variations dans les vitesses de propagation des ondes lumineuses qui sont de signes opposés pour chacun des deux bras. La différence $\Delta\beta$ entre les vitesses de propagation dans les deux bras est proportionnelle à la somme des amplitudes des champs électriques appliqués, c'est-à-dire à peu près proportionnelle à la somme des tensions V. On obtient, à l'emplacement de la bifurcation $B_2$, un déphasage $\Delta\Phi$ entre les deux ondes issues des bras 2 et 3 qui se trouvaient primitivement en phase: $\Delta\Phi = \Delta\beta \times L$ où L est la longueur d'action des champs électriques, c'est-à-dire, dans le cas de la figure, la longueur commune aux électrodes.

L'intensité $I_S$ récupérée dans le guide 4 varie en fonction du déphasage $\Delta\Phi$ selon une loi sinusoïdale dont la courbe de variation est représentée sur la fig. 2. L'intensité $I_3$ varie entre un minimum $I_m$ et un maximum $I_M$, le taux de modulation

$$\frac{I_M}{I_m}$$

étant fonction des pertes de couplage et de la dissymétrie du dispositif. Lorsque la tension V résulte d'une modulation analogique, l'intensité $I_S$ suit la modulation, à condition que le déphasage reste compris entre $2n\,\pi$ et $(2n + 1)\pi$, de façon à conserver une pente de courbe constante. Cette modulation n'est pas linéaire, sauf au voisinage des points d'inflexion

$$(\Delta\Phi = (2n + 1)\frac{\pi}{2}).$$

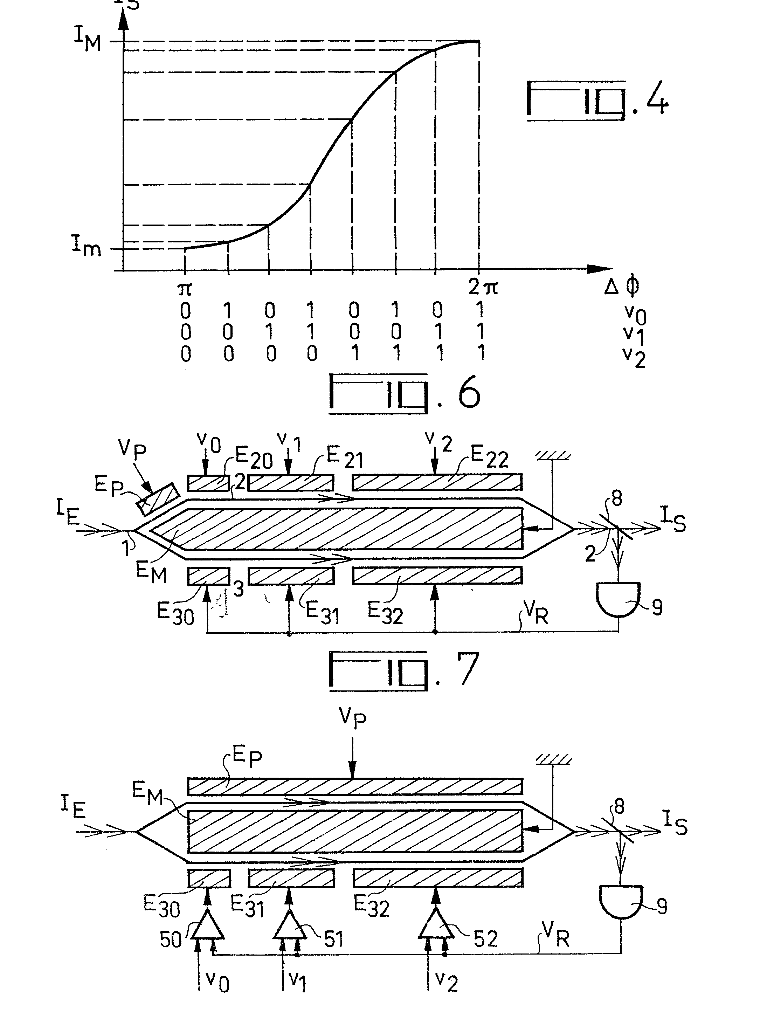

Les propriétés de l'interféromètre à deux bras décrites précédemment sont utilisées dans le dispositif selon l'invention dont le schéma de fonctionnement est représenté sur la fig. 3. Il s'agit d'un modulateur à tensions de commande multiples. Le modulateur de la fig. 3 est à commande numérique: les tensions de commande sont des signaux binaires à deux états: l'état 0 où la tension est nulle et l'état 1 où la tension a une valeur prédéterminée v commune à tous les signaux. Dans le dispositif selon l'invention, on utilise n jeux d'électrodes, n étant le nombre d'entrées de tension de commande. Sur la fig. 3, n = 3. Entre les deux bras 2 et 3 de l'interféromètre, est disposée une électrode centrale $E_M$ reliée à la masse. De part et d'autre des bras sont disposées des paires d'électrodes symétriques: $E_{20}$ et $E_{30}$, $E_{21}$ et $E_{31}$, $E_{22}$ et $E_{32}$. Les électrodes de chaque paire sont reliées entre elles et sont soumises à des signaux binaires: respectivement $v_0$, $v_1$, $v_2$. Les signaux forment un mot de commande issu d'une source de modulation. Par convention, $v_0$ est le bit de plus faible poids et $v_2$ le bit de poids le plus fort. Pour obtenir une modulation de l'intensité de sortie $I_S$ qui tienne compte de ces poids différents, les paires d'électrodes ont des longueurs en progression géométrique: la longueur des électrodes $E_{20}$ et $E_{30}$ étant égale à $\lambda_0$, la longueur des électrodes $E_{2n}$ et $E_{3n}$ recevant un signal $v_n$, est égale à $\lambda_n = 2^n \lambda_0$ (ainsi $\lambda_1 = 2 \lambda_0$ et $\lambda_2 = 4 \lambda_0$). Comme le déphasage produit par effet électro-optique entre les ondes circulant dans les bras 2 et 3 est, à tension de commande égale, proportionnel à la longueur d'action, on voit que l'effet des différents bits sur le déphasage est directement fonction de leurs poids. D'autre part, les déphasages successifs introduits par les tensions successives $v_0$, $v_1$, ... se cumulent et le déphasage total obtenu à l'emplacement de la bifurcation $B_2$ est représentatif de la valeur analogique correspondant au mot formé par les différents bits d'entrée.

Dans le mode de réalisation représenté, on a prévu que le mode d'action des tensions d'entrée soit tel que le déphasage $\Delta\Phi$ total soit égal à $\pi$ lorsque tous les bits sont à l'état 0 et égal à $2\pi$ lorsque tous les bits sont à l'état 1. Ainsi, lorsque la valeur analogique correspondant au mot d'entrée parcourt toute la gamme de valeurs possibles, l'intensité de sortie $I_S$ croît uniformément de sa valeur minimale $I_m$ à sa valeur maximale $I_M$. Les différentes valeurs de $I_S$ correspondant aux différents mots possibles sont obtenues à partir de la courbe de la fig. 4 qui est issue de celle de la fig. 2. En abscisse, sont portés de déphasage cumulé $\Delta\Phi$ et les valeurs de tension $v_0$, $v_1$, $v_2$ qui y conduisent. En ordonnée sont portées les valeurs correspondantes de l'intensité de sortie. Pour satisfaire à la première condition: $\Delta\Phi = \pi$ lorsque toutes les tensions de commande sont nulles, il est nécessaire d'introduire ce déphasage de $\pi$ entre les deux bras. En effet, en l'absence de toute tension, l'intensité de sortie est maximale. A cet effet, il est prévu une électrode supplémentaire de polarisation $E_P$ soumise à une tension constante $V_P$ et de longueur de $\lambda_P$, de façon que $k \lambda_P V_P = \pi$. Cette électrode $E_P$ peut être située, par exem-

ple, du même côté que les électrodes $E_{20}$, $E_{21}$, $E_{22}$, en vis-à-vis avec une portion de l'électrode $E_M$. Pour satisfaire à la deuxième condition: $\Delta\Phi = 2\pi$ lorsque tous les bits de commande sont à l'état 1, il faut choisir convenablement les valeurs de $I_0$ et de v. Le déphasage total $\Delta\Phi$ vaut dans le cas général avec n électrodes:

$$\Delta\Phi = k\cdot[\lambda_P V_P + 2\lambda_0 v_0 + 2\lambda_1 v_1 + ... + 2\lambda_{n-1} S_{n-1}]$$

avec:

$k \lambda_P V_P = \pi$, $v_0 = v_1 = v_2 = v$, $\lambda_1 = 2\lambda_0$ et $\lambda_2 = 4\lambda_0$,

on obtient

$$\Delta\Phi = \pi + 2k\lambda_0 v(1 + 2 + ... + 2^{n-1}) = \pi + 2k\lambda_0 v(2^n - 1).$$

Si v est par exemple fixé par les moyens électroniques de modulation, on détermine ainsi la valeur de $I_0$ permettant d'obtenir $\Delta\Phi = 2\pi$.

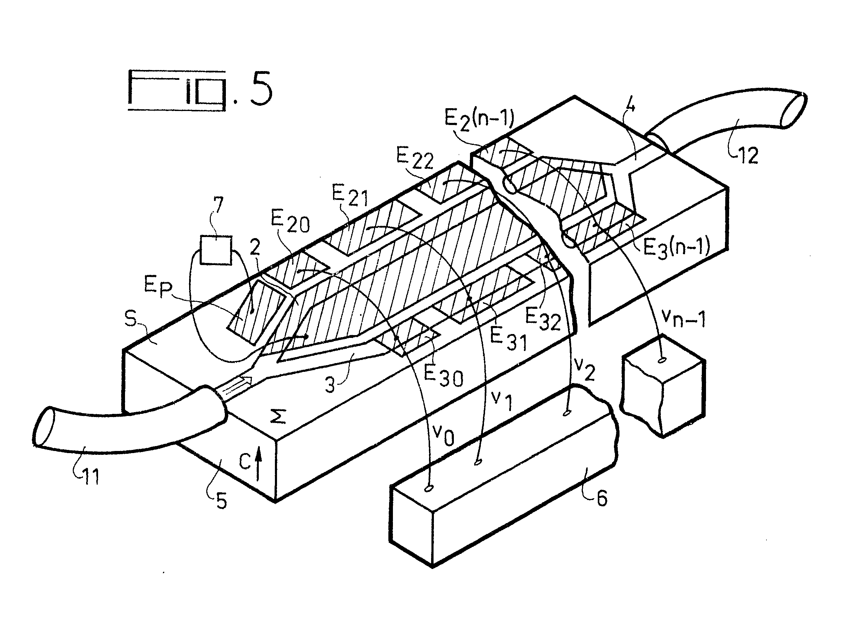

La fig. 5 représente un premier mode de réalisation de l'invention. Le modulateur est réalisé à partir d'un substrat 5 en niobate de lithium. Les guides 1, 2, 3, 4 sont réalisés par photolithographie par diffusion localisée de titane sur une des faces $\Sigma$ du substrat. On a choisi l'orientation de l'axe c du substrat perpendiculaire à la surface $\Sigma$. La longueur totale des bras 2 et 3 est choisie de façon à être supérieure à la somme $\lambda_0 + \lambda_1 + ... \lambda_{n-1}$. L'énergie lumineuse couplée au guide 1 peut par exemple provenir d'une fibre optique 11, le couplage se faisant directement sur la tranche du substrat. De même, l'onde émergente peut être récupérée par une fibre optique 12 à l'autre extrémité du substrat. En raison de l'orientation choisie pour le niobate de lithium, les électrodes sont disposées de façon que les champs électriques créés dans les guides 2 et 3 soient parallèles à l'axe c donc perpendiculaires à la surface $\Sigma$. Dans ce cas, le mode de propagation utilisé dans les guides est un mode TM. Pour cela, il est nécessaire qu'une des électrodes de chaque paire $E_{2i}-E_M$ et $E_{3i}-E_M$ recouvre respectivement les guides 2 et 3. On a choisi: $E_M$ recouvre le guide 2 et $E_{30}$, ..., $E_{3n-1}$ recouvrent le guide 3.

Ainsi, les tensions appliquées aux paires d'électrodes $E_{2i}-E_{3i}$ par rapport à l'électrode $E_M$ reliée à la masse provoquent dans les guides 2 et 3 des champs électriques de sens opposés dont les effets sur le déphasage s'ajoutent. Les signaux binaires $V_0$, ... $v_{n-1}$ sont issus d'une source modulante 6. La tension de polarisation $V_P$ est issue d'une source de tension continue réglable 7. L'électrode $E_P$ est placée du côté de la partie biaisée de l'électrode 2, proche de la bifurcation $B_1$.

Le dispositif représenté a été réalisé pour une commande avec 6 bits avec des guides de longueur 2 $\mu$m, une distance entre bras de 60 $\mu$m et un angle d'embranchement de 1°. Ainsi, la direction de propagation dans la partie biaisée est à peu près la même que dans les guides 1, 2, 3, 4.

On a choisi une longueur $\lambda_0 = 0,3$ mm, si bien que la longueur d'action totale des électrodes de commande est $(2^6-1)\lambda_0 = 18,9$ mm. On a pu mesurer que lorsque tous les bits de commande sont à l'état 1, en choisissant v = 1 V, on obtient une gamme de déphasage égale à $\pi$, ce qui est le résultat recherché. Pour avoir une tension de polarisation de l'ordre de 5 V, il faut que la longueur $\lambda_P$ soit de l'ordre de

$$\lambda_P = \frac{(2^6-1)\lambda_0}{V_P} = 4 \text{ mm.}$$

En réglant finement la valeur de $V_P$, lorsque tous les bits sont à l'état 0, on obtient une valeur minimale $I_m$ très faible, puisque le taux de modulation mesuré

$$\frac{I_M}{I_m}$$

est de l'ordre de 95%. Les valeurs de tension (v = 1 V, $V_P$ = 5 V) sont compatibles avec des circuits électroniques réalisés en technologie TTL.

Au lieu de rechercher une gamme de déphasage égale à $\pi$, ce qui conduit avec le dispositif de la fig. 5 à une répartition de l'intensité émergente non linéaire, on peut réduire cette gamme de façon à utiliser la partie de la courbe de variations située de part et d'autre du point d'inflexion sur une gamme plus réduite. Si l'on veut conserver les mêmes valeurs pour v et $V_P$, avec les mêmes caractéristiques du dispositif, il faut augmenter la longueur $\lambda_P$ et diminuer la valeur de $\lambda_0$. Par exemple, pour diviser la plage de $\Delta\Phi$ (au lieu de parcourir la gamme $\pi-2\pi$, on parcourt la gamme

$$\frac{5\pi}{4} - \frac{7\pi}{4}$$

et la plage de I est divisée par $\sqrt{2}$), il faut faire en sorte que:

$$k \lambda_P V_P = \frac{5\pi}{4}.$$

Comme dans le cas précédent, on avait $k I_P V_p = \pi$ avec $I_p$ = 4 mm, k et $V_P$ étant conservés, on a $I_P$ = 5 mm. Il faut d'autre part que

$$2 k \lambda_0 v (2^n - 1) = \frac{\pi}{2}.$$

Comme dans le cas précédent, on avait $2 k \lambda_0 v (2^n - 1) = \pi$ avec $\lambda_0 = 0,3$ mm, k, v et n étant conservés, on a $\lambda_0 = 0,15$ mm. Ce mode de modulation présente la particularité que l'intensité émergente n'est pas nulle lorsque tous les bits d'entrée sont à l'état 0.

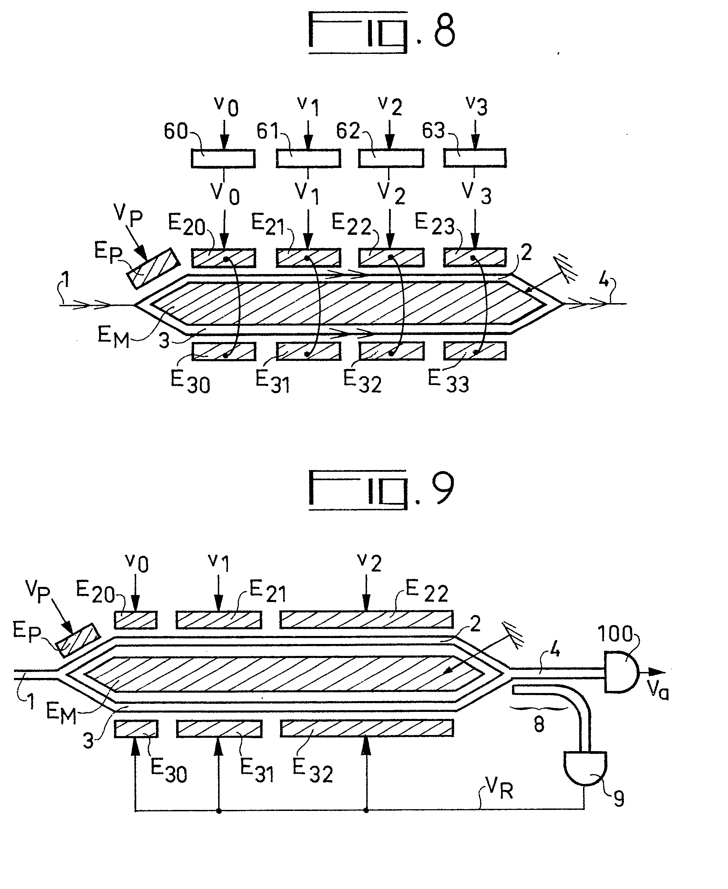

Il existe un autre moyen, préférable au précédent, pour obtenir une répartition à peu près linéaire de l'intensité émergente, cette fois sur la quasi-totalité de la gamme de déphasage $\pi-2\pi$. Ce moyen, décrit en soi dans la demande de brevet français déposée par la demanderesse le 3 avril 1979, et publiée sous le numéro 2 453 426 qui concerne un modulateur possédant une seule entrée de tension modulante, consiste à utiliser une boucle de rétro-action afin de superposer à la tension modulante une tension proportionnelle à l'intensité émergente. L'utilisation de ce procédé dans un modulateur à commande digitale est illustrée, selon deux variantes possibles, par les schémas des figs 6 et 7.

Selon la variante de la fig. 6, les bits de commande et la tension de polarisation sont appliqués entre l'électrode de masse $E_M$ et une série d'électrodes disposées d'un côté d'un interféromètre: $E_P$, $E_{20}$, $E_{21}$ ... de longueurs croissantes suivant les puissances de 2. Le rayonnement émergeant de l'interféromètre est intercepté par un moyen séparateur 8, qui peut être réalisé de différentes manières décrites dans la demande de brevet évoquée ci-dessus. Une fraction de rayonnement est appliquée à un photodétecteur 9 lui aussi décrit dans la même demande de brevet, qui fournit une tension de rétro-action $V_R$. Celle-ci est appliquée entre l'électrode $E_M$ et un deuxième jeu d'électrodes $E_{30}$, $E_{31}$, ... respectivement de même longueur que les électrodes $E_{20}$, $E_{21}$ ...

Les effets des électrodes $E_{2i}$ et $E_{3i}$ sur la vitesse de propagation de la lumière dans chaque branche de l'interféromètre sont ainsi proportionnels aux tensions qui leur sont respectivement appliquées, avec le même coefficient de proportionnalité.

Au lieu d'appliquer séparément les tensions $v_0$, $v_1$ ... d'une part et la tension $V_R$ d'autre part à des jeux d'électrodes différents, on peut, comme le montre le schéma de la fig. 7, les appliquer à un même jeu, par exemple $E_{30}$, $E_{31}$ ... par l'intermédiaire de circuits sommateurs 50, 51, ... à deux entrées dont l'une reçoit la tension $V_R$ et l'autre les bits $v_0$, $v_1$, ... Le jeu d'électrodes $E_{20}$, $E_{21}$, ... étant supprimé, il est remplacé par une électrode unique de polarisation $V_P$.

Bien d'autres variantes de réalisation incluant ou non une boucle de rétro-action sont possibles, en appliquant les bits de commande et éventuellement la tension de rétro-action à un ou deux jeux d'électrodes, celles-ci ayant des longueurs croissantes selon les puissances de 2. Lorsqu'on utilise, pour l'entrée des bits de commande, un seul jeu d'électrodes, il faut multiplier par 2 les produits $\lambda_i v_i$, par rapport au cas où les bits de commande sont appliqués à deux jeux d'électrodes et agissant donc sur les deux bras de l'interféromètre.

Pour moduler l'intensité lumineuse avec des mots de commande constitués de n bits, il n'est pas indispensable d'utiliser des électrodes de longueurs inégales. La fig. 8 illustre une réalisation dans laquelle toutes les électrodes de commande ont la même longueur. Comme le déphasage entre les ondes se propageant dans les deux bras est proportionnel au produit tension x longueur d'électrodes, il faut, pour réaliser les poids différents, effectuer la pondération sur les tensions à la place des longueurs. C'est pourquoi le modulateur représenté sur la fig. 8 comprend, outre l'interféromètre associé à l'électrode de polarisation $E_P$ recevant la tension $V_P$ et aux électrodes $E_{20}$, $E_{21}$, ... reliées respectivement aux électrodes $E_{30}$, $E_{31}$, ... des diviseurs de tension 60, 61, 62, 63 recevant respectivement les bits de tension 0 et v et délivrant respectivement des tensions $V_0$, $V_1$, $V_2$, $V_3$ avec

$$V_0 = \frac{v_0}{2^3 \, r}, \quad V_1 = \frac{v_1}{2^2 \, r}, \quad V_2 = \frac{v_2}{2r} \text{ et } V_3 = \frac{v_3}{r}$$

où r est un rapport de division choisi en fonction de v et de la valeur des longueurs des électrodes de commande. Le fonctionnement du modulateur de la fig. 8 est identique à celui de la fig. 3. On peut réaliser un modulateur à commande digitale avec des électrodes de même longueur en utilisant toutes les variantes décrites ci-dessus, et notamment en lui associant une boucle de rétro-action pour linéariser sa réponse.

Le modulateur selon l'invention est particulièrement applicable aux systèmes optiques de transmission par fibre optique et au traitement optique de l'information. Les faibles tensions de commande qu'il nécessite, sa grande bande passante et ses dimensions réduites le rendent intéressant par rapport aux dispositifs déjà connus. Une application intéressante de ce modulateur est la conversion numérique-analogique. En effet, étant donné que, en choisissant convenablement les paramètres, on peut obtenir une intensité émergente croissante avec un mot de commande que l'on peut associer à une valeur analogique croissante, il est possible d'utiliser cette propriété pour récupérer une tension analogique dont la valeur sera à peu près proportionnelle à cette valeur analogique. L'un des moyens possibles consiste à placer un photodétecteur sur le guide de sortie 4 de l'interféromètre. Un schéma de convertisseur est représenté sur la fig. 9. Il est très recommandé d'utiliser une boucle de rétro-action pour assurer une variation linéaire de l'intensité donc une conversion de bonne qualité. A la sortie d'un photodétecteur 100, on récupère une tension $V_a$ correspondant à la valeur analogique du mot d'entrée.

**Revendications**

1. Modulateur d'intensité lumineuse à commande électrique numérique comprenant, à la surface d'un substrat (S) possédant des propriétés électro-optiques, un interféromètre à deux bras (2, 3) reliés à un guide d'entrée (11) recevant un rayonnement optique incident, les fractions de rayonnement propagées dans les deux bras se combinant à la sortie de l'interféromètre dans un guide de sortie (4), l'intensité de rayonnement émergent étant fonction du déphasage introduit par ladite commande électrique numérique entre les fractions de rayonnement propagées dans les deux bras (2, 3); ledit déphasage étant la somme de déphasages élémentaires créés le long desdits bras (2, 3) par des tensions numériques de commande, caractérisé en ce que lesdits déphasages élémentaires sont ordonnés selon n termes successifs d'une progression géométrique de raison 2, n étant le nombre desdites tensions numériques de commande ($V_0$, $V_1$, $V_2$, ... $V_{n-1}$); l'ensemble ordonné des $2^n$ valeurs distinctes dudit déphasage découlant de ladite commande électrique numérique étant compris dans une plage assignant $2^n$ valeurs ordonnées à l'intensité lumineuse émergente ($I_S$); la plage de variation du déphasage n'étant pas supérieure à $\pi$ et correspondant à une partie comprise entre deux extrema successifs de la courbe de variation de l'intensité lumineuse émergente (IS) en fonction du déphasage.

2. Modulateur selon la revendication 1, caractérisé en ce qu'il comprend une source de tension continue réglable (7) permettant de créer un déphasage constant, de façon que l'intensité émergente soit minimale lorsque toutes les tensions numériques de commande sont à l'état 0.

3. Modulateur selon la revendication 2, caractérisé en ce que la tension continue est appliquée entre une électrode de masse commune ($E_M$) pour toutes les tensions de commande et une électrode de polarisation ($E_p$) placée au voisinage d'une des bifurcations de l'interféromètre.

4. Modulateur selon la revendication 2, caractérisé en ce que les n tensions de commande sont appliquées entre une électrode de masse commune, d'une part, et respectivement au moins n électrodes ($E_{20}$, $E_{21}$, ... $E_{2(n-1)}$) placées du même côté par rapport aux bras.

5. Modulateur selon la revendication 4, caractérisé en ce que les n électrodes ont des longueurs en progression géométrique de raison 2, les n tensions de commande étant appliquées directement aux électrodes.

6. Modulateur selon la revendication 4, caractérisé en ce que les n électrodes ont la même longueur et en ce que les n tensions de commande sont appliquées aux n électrodes par l'intermédiaire de n diviseurs de tension (60, 61, 62, 63) dont les rapports de division sont en progression géométrique de raison 2.

7. Modulateur selon la revendication 1, caractérisé en ce qu'il comprend en outre une boucle de rétro-action ($V_R$) recevant une partie du rayonnement émergent dans le guide de sortie (4), et induisant n déphasages de rétro-action se superposant respectivement aux n déphasages créés par les tensions numériques de commande.

8. Convertisseur numérique-analogique fournissant une tension de sortie correspondant à la valeur analogique associée à un mot de commande formé de n tensions numériques, caractérisé en ce qu'il comprend un modulateur selon la revendication 6, commandé par ces n tensions numériques, et des moyens photodétecteurs (100) recueillant au moins une fraction de l'intensité du rayonnement émergent et fournissant ladite tension de sortie.

**Claims**

1. Electrically and digitally controlled light intensity modulator comprising, at the surface of a substrate (S) having electro-optical properties, an interferometer having two branches (2, 3) connected to an input guide (11) receiving an optical input radiation, the radiation fractions propagated within the two branches combining with each other at the output of the interferometer within the output guide (4), the intensity of the emerging radiation depending on the phase shift introduced by said electrical and digital control between the fractions of radiation propagated within the two branches (2, 3); said phase shift being the sum of the elementary phase shifts generated along said branches (2, 3) by digital control voltages, characterized in that said elementary phase shifts are ordered into m successive terms of a geometric progression at ratio 2, m being the number of said digital control voltages ($V_0$, $V_1$, $V_2$, ... $V_{n-1}$); the ordered set of $2^n$ distinct values of said phase shift resulting from said electrical and digital control being comprised within a range assigning $2^n$ ordered values to the emerging luminous intensity ($I_S$); the variation range of the phase shift not exceeding and corresponding to a portion comprised between two successive extrema of the curve of variation of the emerging luminous intensity (IS) as a function of the phase shift.

2. Modulator according to claim 1, characterized in that it comprises a direct adjustable voltage source (7) permitting the generation of a constant phase shift so that the emerging intensity is minimum when all the digital control voltages are in the state 0.

3. Modulator according to claim 2, characterized in that the direct voltage is applied between an electrode of common ground ($E_M$) of all the control voltages and a polarization electrode ($E_P$) located in the neighborhood of one of the bifurcations of the interferometer.

4. Modulator according to claim 2, characterized in that the n control voltages are applied between a common ground electrode on the one hand and respectively at least n electrodes ($E_{20}$, $E_{21}$, ... $E_{2(n-1)}$) located on the same side with respect to the branches.

5. Modulator according to claim 4, characterized in that the n electrodes have lengths in accordance with a geometric progression at ratio 2, the n control voltages being directly applied to the electrodes.

6. Modulator according to claim 4, characterized in that the n electrodes have the same length and in that the n control voltages are applied to the n electrodes through n voltage dividers (60, 61, 62, 63) the division ratios of which are in accordance with a geometric progression at ratio 2.

7. Modulator according to claim 1, characterized in that it further comprises a feedback loop ($V_R$) receiving a portion of the radiation emerging in the output guide (4) and introducing n feedback phase shifts superposing themselves respectively onto the n phase shifts generated by the digital control voltages.

8. Digital-analog converter providing an output voltage corresponding to the analog value associated with a control word formed of n digital voltages, characterized in that it comprises a modulator according to claim 6, which is controlled by these n digital voltages and photodetector means (100) collecting at least a fraction of the intensity of emerging radiation and providing said output voltage.

**Patentansprüche**

1. Lichtintensitätsmodulator mit elektrischer Digitalsteuerung, der an der Oberfläche eines elektrooptische Eigenschaften aufweisenden Substrates (S) ein Interferometer mit zwei Zweigen (2, 3) umfasst, die an einen Eingangsleiter (11) angeschlossen sind, welcher eine ankommende optische Strahlung empfängt, wobei die in den beiden Zweigen sich ausbreitenden Strahlungsbruchteile am Ausgang des Interferometers in einem Ausgangsleiter (4) miteinander kombiniert werden und wobei die austretende Strahlungsintensität von der Phasenverschiebung abhängt, welche durch die genannte elektrische Digitalsteuerung zwischen den Strahlungsbruchteilen erzeugt wird, welche sich in den beiden Zweigen (2, 3) ausbreiten; wobei ferner die genannte Phasenverschiebung die Summe der elementaren Phasenverschiebungen ist, die längs der Zweige (2, 3) durch digitale Steuerspannungen erzeugt werden, dadurch gekennzeichnet, dass die genannten elementaren Phasenverschiebungen geordnet sind gemäss $n$ aufeinanderfolgenden Termen einer geometrischen Progression mit dem Verhältnis 2, wobei $n$ die Anzahl der digitalen Steuerspannungen ($V_0$, $V_1$, $V_2$, ... $V_{n-1}$) ist; wobei die geordnete Gruppe der $2^n$ verschiedenen Werte der genannten Phasenverschiebung, die sich durch die genannte elektrische Digitalsteuerung ergeben, in einem Bereich enthalten ist, welcher der austretenden Lichtintensität ($I_S$) $2^n$ geordnete Werte zuordnet; und wobei der Änderungsbereich der Phasenverschiebung nicht grösser ist als ein entsprechender, zwischen zwei aufeinanderfolgenden Extremwerten liegender Teil der Kurve, welche die Änderung der austretenden Lichtintensität (IS) als Funktion der Phasenverschiebung angibt.

2. Modulator nach Anspruch 1, dadurch gekennzeichnet, dass er eine einstellbare Gleichspannungsquelle (7) enthält, welche die Erzeugung einer konstanten Phasenverschiebung ermöglicht, so dass die austretende Energie minimal ist, wenn alle digitalen Steuerspannungen im Zustand 0 sind.

3. Modulator nach Anspruch 2, dadurch gekennzeichnet, dass die Gleichspannung zwischen einer gemeinsamen Massenelektrode ($E_M$) für alle Steuerspannungen und einer Polarisationselektrode ($E_P$), welche in der Nähe einer der Gabelungen des Interferometers angeordnet ist, angelegt wird.

4. Modulator nach Anspruch 2, dadurch gekennzeichnet, dass die $n$ Steuerspannungen einerseits zwischen einer gemeinsamen Massenelektrode sowie wenigstens jeweils $n$ Elektroden ($E_{20}$, $E_{21}$, ... $E_{2(n-1)}$), die auf derselben Seite in bezug auf die Zweige angeordnet sind, angelegt werden.

5. Modulator nach Anspruch 4, dadurch gekennzeichnet, dass die $n$ Elektroden Längen gemäss einer geometrischen Progression mit dem Verhältnis 2 aufweisen, wobei die $n$ Steuerspannungen direkt an die Elektroden angelegt sind.

6. Modulator nach Anspruch 4, dadurch gekennzeichnet, dass die $n$ Elektroden dieselbe Länge aufweisen und dass die $n$ Steuerspannungen an die $n$ Elektroden über $n$ Spannungsteiler (60, 61, 62, 63) angelegt sind, deren Teilerverhältnisse einer geometrischen Progression mit dem Verhältnis 2 folgen.

7. Modulator nach Anspruch 1, dadurch gekennzeichnet, dass er ferner eine Rückkopplungsschleife ($V_R$) enthält, die einen Teil der im Ausgangsleiter (4) austretenden Strahlung empfängt und $n$ Gegenkopplungs-Phasenverschiebungen einführt, die sich jeweils mit den $n$ Phasenverschiebungen überlagern, welche durch die digitalen Steuerspannungen erzeugt werden.

8. Digital/Analog-Umsetzer, der eine Ausgangsspannung liefert, welche dem Analogwert entspricht, der einem Steuerwort zugeordnet ist, welches aus $n$ Digitalspannungen gebildet ist, dadurch gekennzeichnet, dass er einen Modulator nach Anspruch 6 enthält, der durch diese $n$ digitalen Spannungen gesteuert ist, und Photodetektormittel (100) umfasst, welche wenigstens einen Bruchteil der austretenden Strahlung auffangen und die genannte Ausgangsspannung abgeben.

Fig. 1

Fig. 2

Fig. 3

0 020 216

Fig.4

Fig.6

Fig.7

11

0 020 216

$\sqsubset \sqsubset$ .5

FIG. 8

FIG. 9